# EUROPEAN PATENT SPECIFICATION

(11) **EP 0 580 865 B1**
(45) Date of publication and mention of the grant of the patent: **22.04.1998**
(21) Application number: 93901548.3
(22) Date of filing: 14.01.1993
(51) Int. Cl.: H01M 10/40, H01M 4/02

(54) **SECONDARY BATTERY**
SEKUNDÄR-BATTERIE
PILE SECONDAIRE

(30) Priority: 17.01.1992 JP 27417/92
(43) Date of publication of application: 02.02.1994
(73) Proprietor: YUASA CORPORATION, Takatsuki-shi, Osaka 569 (JP)
(72) Inventor: TAKEDA, Kazunari, Takatsuki-shi Osaka 569 (JP); NODA, Tomohiko, Takatsuki-shi Osaka 569 (JP); IZUCHI, Syuichi, Takatsuki-shi Osaka 569 (JP); INAMASU, Tokuo, Takatsuki-shi Osaka 569 (JP)
(74) Representative: Stoner, Gerard Patrick
(86) International application number: PCT/JP93/00040
(87) International publication number: WO 93/14528

(56) References cited:
- EP-A- 0 098 772
- EP-A- 0 318 161
- EP-A- 0 396 324
- FR-A- 2 606 220
- FR-A- 2 632 455
- JP-A- 1 107 470
- JP-A- 2 040 867
- JP-A-63 094 563
- JP-A-63 152 885
- JP-A-63 164 176
- US-A- 4 808 496
- US-A- 4 908 283
- PATENT ABSTRACTS OF JAPAN vol. 15, no. 425 (C-0879) 29 October 1991 & JP-A-03 177 409 (KOBAYASHI HIROSHI)
- PATENT ABSTRACTS OF JAPAN vol. 12, no. 452 (E-687) 28 November 1988 & JP-A-63 181 259 (UBE IND LTD)

## Description

This invention relates to cathode, electrolyte and anode combinations in secondary batteries operating reversibly at environmental temperature.

### Background

Demands for minimized size, weight and thickness of batteries and large energy density are increasing. Among primary batteries, small and light lithium batteries are in practical use, in a limited application field. Among secondary batteries, small and light batteries using nonaqueous electrolyte attract current attention as an alternative to conventional lead and nickel-cadmium batteries. However, an electrode active material with practical cycle and self-discharge characteristics has not yet been found.

To obtain a small and light battery having large energy density and high reliability, it is necessary-to examine:
(1) the problem of the electrode active material and electrode, and
(2) the problem of the electrolyte.

As for (1), we examined film-type batteries, i.e. with unit cells 100 to 500 µm thick (also called "sheetform"). Manufacture of satisfactory metallic lithium foil was technically difficult and manufacturing was complicated. In secondary batteries there was a formation of lithium dendrite and passivation of the interface, so that use of metallic lithium was restricted.

Investigations of lithium alloys e.g. lithium-aluminium, lithium-zinc and lithium-tin, continue. However, the electrode cracks or breaks into fine pieces with repeated charging and discharging, so that cycle characteristics are not improved when these alloys are used because they have small strength. As alternatives for restricting lithium dendrite, separators made by laminating non-woven fabrics of polypropylene or glass fibre have been used.

Electrode active materials utilizing the intercalation or doping phenomenon in layer compounds are expected to show excellent charge/discharge cycle characteristics, because theoretically complicated chemical reactions do not occur on charging and discharging. For example, carbon as electrode active-material shows a high doping capacity, low self-discharge rate and an excellent cycle characteristic. It also has a base potential near to that of metallic lithium.

Regarding problem (2), liquid electrolytes prepared by dissolving ionic compound in organic electrolytes have been used for batteries and other electro-chemical devices.

As a means to solve existing problems of electrolyte leakage and elution/evaporation of electrode material, and escape of electrolyte during sealing, ion-conductive high-molecular compounds having large ionic conductivity have been studied.

These include straight-chain, network crosslink and comb-shaped polymers, homopolymers and copolymers having ethylene-oxide as basic unit. Network crosslink and comb-shaped forms avoid crystallisation to increase ionic conductivity at low temperature.

Electro-chemical cells using ion-conductive high-molecular compounds are described in e.g. US-A-4303748, US-A-4589197 and US-A-4547440. These describe dissolving an ionic compound in a high-molecular compound having a polyether structure.

It is required for the high molecular compound to have both high ionic conductivity and high mechanical properties (mechanical strength and flexibility etc). These properties are hard to combine, for example ionic conductivity at room-temperature or below is below a practical range. JP-A-59/149601, JP-A-58/75779 and US-A-4792504 disclose improving ionic conductivity by adding an organic solvent, preferably an organic solvent with high permittivity, to the high-molecular compound but maintaining the solid state. The ionic conductivity is improved but the mechanical strength is worse. Electrode active materials utilizing intercalation or doping of layer compounds are subject to expansion and contraction on charging and discharging. To cope with this it is required to improve mechanical strengths of the electrode and the electrolyte.

When an ion-conductive high-molecular compound is used as the electrolyte it becomes necessary to make it in film form to reduce internal resistance, e.g. in a film type battery. It is possible to work the uniform film easily into a desired shape, and various methods are known. For example, (a) a solution of the high-molecular compound is cast and the solvent is evaporated and removed, (b) polymeric monomer or macromer is applied on a substrate to be heated and polymerised, or (c) curing is by means of irradiation with activated rays. It is possible to obtain a uniform film. However, fine short-circuiting sometimes occurs through breakage of the electrolyte layer caused by compression deformation when actually laminating it between the electrodes to assemble the device. Again, for uniform film, the improvement of mechanical strength is important as well as ionic conductivity.

EP-A-318161 discloses a lithium battery with a radiation cross-linked polymeric electrolyte based on polyethylene glycol modified with (meth)acrylic groups. Preferred MW is 200 to 2000, more preferably 200 to 800. It contains an ionic compound such as LiCℓO₄, NaCℓO₄, LiF₃CSO₃ or LiBF₄ dissolved in organic solvent such as propylene carbonate, γ-butyrolactone, 1,3-dioxolan or 2-methyl-THF. The anode is lithium metal, the cathode may have cathode active material and conductive agent dispersed in a composition as used for the electrolyte.

FR-A-2606220 discloses batteries and other electrochemical devices using solvent-free protonic conduction through a polymeric electrolyte in which a water-soluble salt of a strong acid is in solid solution. A wide range of possible polymers is disclosed, including polyoxyethylenes (high MW in range 100,000 to 5,000,000), polyamides, polyesters polysulphones and polyamines. The materials are elastic; the possibility of crosslinking, e.g. of amide copolymers is mentioned. It is proposed that either or both anode and cathode may be made by dispersing their active materials in the electrolyte polymer.

An object herein is to provide a secondary battery excellent in charge/discharge characteristic and long-term reliability and with high performance.

As set out in claim 1, the invention provides a secondary battery comprising a cathode mixture composite, an electrolyte and an anode mixture composite, the electrolyte being composed of certain specified types of ion-conductive high-molecular compound including one or more kinds of ionic compounds in a dissolved state, containing an organic compound to dissolve the ionic compound, and both the cathode composite and the anode composite having the ion-conductive high-molecular compound as a component material.

Since the electrolyte is composed of the ion-conductive high-molecular compound, the formation of dendrite is restricted when using lithium for the anode and the liquid-leakage resistance for long-term reliability is good. Since the mechanical strength of the electrolyte is good, short-circuiting is prevented at manufacture of the battery and in the charge/discharge cycle. Since both the cathode composite and the anode composite have the ion-conductive high-molecular compound as their component material, effective surface areas-of electrode active material in contact with the electrolyte and current collector plate are increased in the cathode composite and the anode composite. For this reason, the cathode composite and the anode composite have good performance. Mechanical strengths of the cathode composite and the anode composite are also improved in the same way as the electrolyte. Therefore, it becomes possible to cope with the problem of expansion and contraction of the electrode active material accompanying charging and discharging. For the reason described above, the charge/discharge cycle characteristic is improved.

As set out in claim 1, the foregoing ion-conductive high-molecular compound is prepared by polymerizing a high-molecular compound having reactive double bond and polyether structure, to enable a crosslinked network structure. The crosslinked polymer formed by ether bonds does not include intermolecular hydrogen bond, so that its structure has a low glass transition temperature. For this reason, migration of dissolved ionic compound is easy therein. Specifically, the compounds are selected from those of formula (I) and formula (II) below. Formula (I) can denote monocrylate or monomethacrylate of polyethylene glycol, formula (II) can denote diacrylate or dimethacrylate of polyethylene glycol. 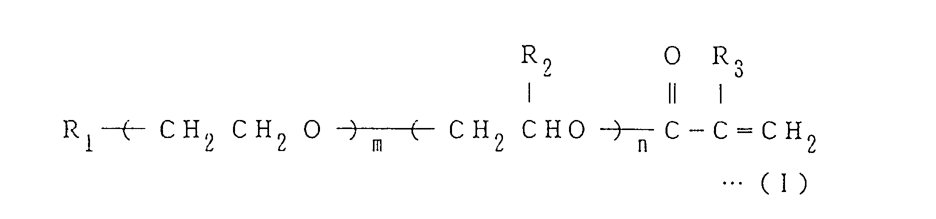 (R₁, R₂ and R₃ are hydrogen or lower alkyl group with one or more carbon number, and m and n are integers lying in the ranges m≥1, n≥0 and n/m = 0 to 5) 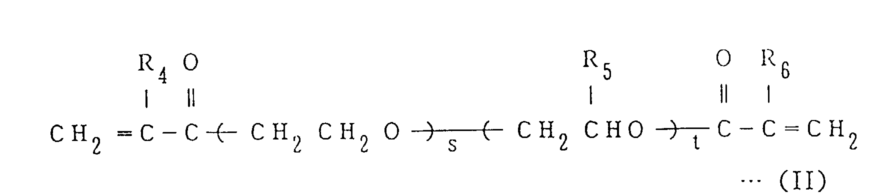 (R₄, R₅ and R₆ are hydrogen or lower alkyl group with one or more carbon number, and s and t are integers lying in the ranges s ≥3, t≥0 and t/s = 0 to 5)

As the ionic compound, inorganic ionic salts of Li, Na or K such as LiClO₄, LiBF₄, LiAsF₆, LiPF₆, LiI, LiBr, Li₂B₁₀Cl₁₀, LiCF₃SO₃, LiCF₃CO₂, LiSCN, NaI, NaSCN, NaBr, NaClO₄, KClO₄ and KSCN; quaternary ammonium salts such as (CH₃)₄ NBF₄, (CH₃)₄NBr, (C₂H₅)₄NClO₄, (C₂H₅)₄NI, (C₃H₇)₄NBr, (n-C₄H₉)₄NClO₄, (n-C₄H₉)₄NI, (C₂H₅)₄N-maleate, (C₂H₅)₄N-benzoate and (C₂H₅)₄N-phthalate; and organic ionic salts such as lithium stearyl sulphonate, sodium octyl sulphonate and lithium dodecylbenzene sulphonate may-be mentioned as examples. Two or more of these ionic compounds may be used combined.

Generally, a molar ratio range of the ionic compound to ether bond oxygen of the foregoing high-molecular compound is 0.0001 to 5.0, especially a ratio of 0.005 to 2.0 is preferable. When the quantity of ionic compound is excessive, it does not dissociate but is only present as a mixture, decreasing the ionic conductivity. The proper mixing ratio of the ionic compound differs depending on the electrode active material. For example, a ratio around a value offering the maximum ion conductivity of electrolyte is preferable for a battery using an intercalated layer compound, while a ratio must be set so as to correspond to a change of ion concentration in the electrolyte caused by charging and discharging for a battery using doped electro-conductive polymer as the electrode active material.

There is no special limitation in an inclusion method for the ionic compound. For example, the ionic compound is dissolved in organic solvent such as methyl ethyl ketone or tetrahydrofuran, mixed uniformly with the foregoing high-molecular compound and the organic solvent then removed under vacuum reduced pressure.

As specified in claim 1, an organic compound which can dissolve the ionic compound is included in the ion-conductive high-molecular compound. By doing so, the ionic conductivity can be improved markedly without changing the basic skeleton of the high-molecular compound.

Organic compounds which can dissolve the ionic compound include cyclic carbonic esters such as propylene carbonate and ethylene carbonate, cyclic esters such as γ-butyrolactone, ethers such as tetrahydrofuran and its derivative, 1,3-dioxane, 1,2-dimethoxyethane and methyldiglyme, nitriles such as acetonitrile and benzonitrile, dioxolane or its derivatives and sulfolane or its derivative. These compounds may be used singly or as a combination of two or more kinds. Materials are not limited to these. Compounding ratios and compounding method can be chosen freely.

At least one of ethylene oxide polymer and ethylene oxide-propylene oxide polymer may be included in the ion-conductive high-molecular compound. By doing so, mechanical strengths of the cathode composite, electrolyte and anode composite can be improved. Principal-chain straight-chain type polyethylene oxide may be mentioned as the ethylene oxide polymer.

A binder may be included as a component material in at least one of the cathode composite and the anode composite. By doing so, mechanical strengths of the cathode composite and anode composite can be improved.

The binder is prepared by dissolving or dispersing an organic compound, which will be described later, in a solvent such as dimethylformamide or xylene. As the organic compound, polymer or copolymer of the following compounds may be mentioned: acrylonitrile, methacrylonitrile, vinylidene fluoride, vinyl fluoride, chloroprene, vinyl pyridine and derivatives thereof, vinylidene chloride, ethylene, propylene and cyclic dienes. Suitable cyclic dienes include cyclopentadiene and 1,3-cyclohexadiene.

For including the binder in the cathode composite and anode composite, the organic compound may be dissolved in solvent, the electrode active material and ion-conductive high-molecular compound etc. dispersed in it, and the prepared solution is used as an application liquid. Or the electrode active material and ion-conductive high-molecular compound etc. may be dispersed in a dispersant liquid comprising the foregoing organic compound and a dispersant for dispersing the organic compound, and the prepared solution used as an application liquid.

Carbon material may be used as the negative active material for the anode composite. The carbon material has a high doping capacity, a low self-discharge rate, an excellent cycle characteristic, and a base-potential extremely near to that of metallic lithium. It does not produce a theoretically complicated chemical reaction on electro-chemical reaction during charging and discharging. Consequently, an extremely excellent charge/discharge cycle characteristic can be obtained when the carbon material is used as the negative active material for the anode composite. In addition, the anode composite becomes extremely stable from the physical and electro-chemical points of view.

As the negative active material, alloys including lithium metal such as lithium-aluminium, lithium-lead, lithium-tin, lithium-aluminium-tin, lithium-gallium and Wood's alloys, lithium metals and carbon materials may be mentioned. These materials may be used in combination of two or more kinds.

As the carbon material; it is preferable to use e.g. materials whose properties as determined by X-ray diffraction are as listed in Table 1, carbon powder prepared by burning anisotropic pitch at a temperature of higher than 2,000°C (average grain size: not more than 15 µm) and carbon fibre.

**[Table 1]**

| | |
|---|---|
| Spacing of lattice planes (d002) | 3. 35∼3.40Å |
| Size of crystallite in a-axis direction | La : 200Å or more |
| Size of crystallite in c-axis direction | Lc : 200Å or more |
| True density | 2.00∼2.25g/cm³ |

As the positive active material for use in the cathode composite, the following materials may be mentioned. There are I-group metallic compounds such as CuO, Cu₂O, Ag₂O, CuS and CuSO₄; IV-group metallic compounds such as TiS₂, SiO₂ and SnO, V-group metallic compounds such as V₂O₅, V₆O₁₂, VOₓ, Nb₂O₅, Bi₂O₃ and Sb₂O₃; VI-group metallic compounds such as CrO₃, Cr₂O₃, MoS₂, WO₃ and seO₂; VII-group metallic compounds such as MnO₂ and Mn₂O₃; VIII-group metallic compounds such as Fe₂O₃, FeO, Fe₃O₄, Ni₂O₃, NiO, CoS₂ and CoO; metallic compounds such as lithium-cobalt composite oxide and lithium-manganese composite oxide, for example, expressed by the general formulae LiₓMX₂ and LiₓMN_{y}X₂ (M and N are I- through VIII-group metals and X is chalcogen compound such as oxygen and sulfur) ; electro-conductive high-molecular compounds such as polypyrrole, polyaniline, polyparaphenylene, polyacetylene and polyacene group materials; and pseudo-graphite structural carbon material. However, the kind of positive active material is not limited to these.

Concerning the application of the ion-conductive high-molecular compound onto the surfaces of the cathode composite and the anode composites, it is preferable to apply the compound at a uniform thickness by means of, for example, roller coating using an applicator roll, a doctor blade method, spin coating or bar coater. However, the application method is not limited to these. By these means, it become possible to apply the ion-conductive high-molecular compound on the surfaces of the cathode composite and the anode composite at a desired thickness and in a desired shape.

Concerning the application of the cathode composite and the anode composite on the positive current collector plate and the negative current collector plate respectively, it is preferable to apply the composite at a uniform thickness by means of, for example, roller coating using an applicator roll, a doctor blade method, spin coating or bar coater. However, the application method is not limited to these. By these means, it becomes possible to increase practical surface area of the electrode active material in contact with the electrolytes and current collector plates in the cathode composite and the anode composite, and it become possible to apply the cathode composite and the anode composite on the positive current collector plate and the negative current collector plate in a desired thickness and shape. In these cases, carbon such as graphite, carbon black and acetylene black (this carbon has properties quite different from those of the carbon used for the negative active material) and electro-conductive material such as metallic powder and electro-conductive metal oxide are mixed in the cathode composite and the anode composite as occasion demands, so that electron conductivity may be improved. Further, in order to obtain an uniformly mixed and dispersed system when manufacturing the cathode composite and the anode composite, several kinds of dispersants and dispersion media may be added. In addition, a thickener, an extender and a tackifier may be added.

It is preferable to use aluminium, stainless steel, titanium or copper for the positive current collector plate and stainless steel, iron, nickel or copper for the negative current collector plate. However, the kind of material is not limited to these.

### Brief Description of the Drawings

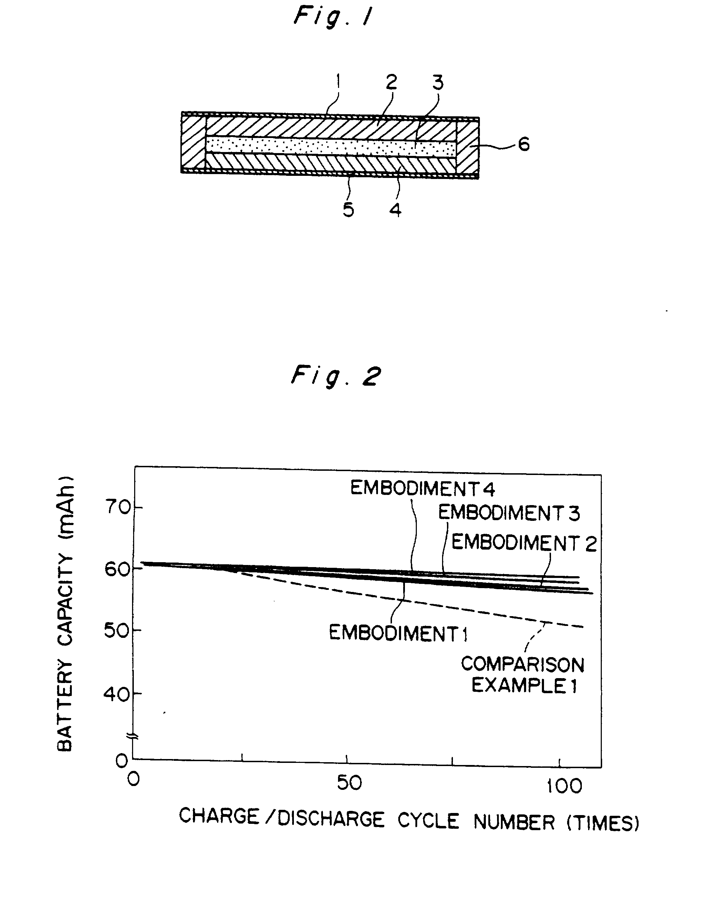

Fig. 1 is a vertical sectional view showing a film type battery which is an example of a secondary battery of this invention. Fig. 2 is a diagram showing results of charge/ discharge cycle test for film type batteries of embodiments 1 to 4 and a comparison example 1.

### (Embodiment 1)

Fig. 1 is a vertical sectional view showing a film type battery which is an example of a secondary battery of this invention. In this figure, 1 is a positive current collector plate comprising aluminium, 2 is a cathode composite, 3 is an electrolyte layer, 4 is an anode composite, 5 is a negative current collector plate comprising stainless steel and 6 is a sealing material comprising denatured polypropylene. The two current collector plates 1, 5 serve also as outer packaging.

The cathode composite 2 is composed of a positive active material, a conductive material and an ion-conductive high-molecular compound. The anode composite 4 is composed of a negative active material and an ion-conductive high-molecular compound. The electrolyte layer 3 is composed of an ion-conductive high-molecular compound.

The film type battery of this embodiment was made up by the following processes (a) to (d).
(a); The cathode composite 2 was formed in the following manner. LiCoO₂ as positive active material was mixed with acetylene black as the conductive material, at a weight ratio of 85 to 15 (mixture A₁). 10 weight parts of high-molecular mixture, prepared by mixing the high-molecular compound of formula (III) below with the high-molecular compound of formula (IV) below at a weight ratio of 4 to 6, were mixed with 0.03 weight part of azobisisobutyronitrile, 1 weight part of LiBF₄, 10 weight parts of 1,2-dimethoxyethane and 10 weight parts of γ-butyrolactone (mixture B₁). Mixture A₁ and the mixture B₁ were mixed at a weight ratio of 10 to 3 under an atmosphere of dried inert gas. The mixture thus prepared was cast by means of screen coating onto the positive current collector plate 1, on a surface of which a conductive carbon film had been formed. Thereafter, the mixture was left for one hour to cure at a temperature of 100°C under an atmosphere of dried inert gas. The film thickness of the cathode composite 2 formed on the positive current collector plate 1 was 60 µm. The molecular weight of the compound of formula (III) is 400 and an average molecular weight of the compound of formula (IV) is 5,000. 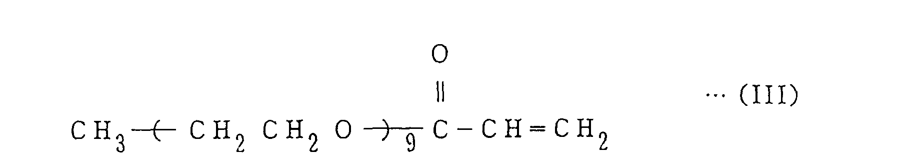 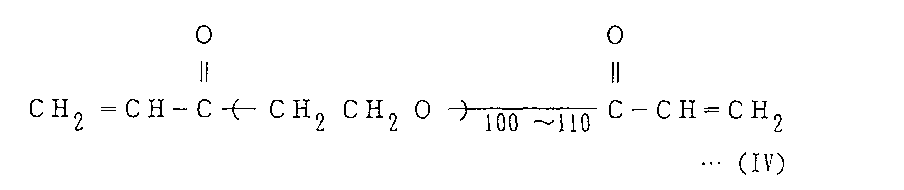
(b) ; The anode composite 4 was formed in the following manner. 10 weight parts of high-molecular mixture the same as in process (a) were mixed with 1 weight part of LiBF₄, 0.03 weight parts of azobisisobutyronitrile, 10 weight parts of 1,2-dimethoxyethane and 10 weight parts of γ-butyrolactone. This mixture was mixed with carbon powder, as the negative active material, at a weight ratio of 3 to 7 under an atmosphere of dried inert gas. The mixture thus prepared was cast by means of screen coating onto the negative current collector plate 5, and left for one hour to cure at a temperature of 100°C under the atmosphere of dried inert gas. The thickness of the anode composite 4 formed on the negative current collector plate 5 was 30 µm.
(c); The electrolyte layer 3 was formed on the anode composite 4 in the following manner. 30 weight parts of high-molecular mixture the same as in process (a) were mixed with 6 weight parts of LiBF₄, 0.05 weight parts of azobisisobutyronitrile, 32 weight parts of 1,2-dimethoxyethane and 32 weight parts of γ-butyrolactone. This mixture was cast by means of screen coating onto the anode composite 4, and left for one hour to cure at a temperature of 100°C under an atmosphere of dried inert gas. The thickness of the electrolyte layer 3 formed on the anode composite 4 was 25 µm.
   In the processes (a) through (c), the high-molecular compounds of formulas (III) and (IV) were polymerized by heat to form ion-conductive high-molecular compounds having crosslink network structures in the presence of azobisisobutylonitrile as reaction initiator. LiBF₄ as the ionic compound is included in the prepared ion-conductive high-molecular compound under a state of being dissolved by the 1,2-dimethoxyethane and γ-butyloractone.
(d); A laminate of the cathode composite 2 and the positive current collector plate 1 prepared by the process (a) and a laminate of the electrolyte layer 3, the anode composite 4 and the negative current collector plate 5 prepared by the process (c) were contacted with each other at the cathode composite 2 and the electrolyte layer 3. Thereby, a film type battery as shown in Fig. 1 was prepared.

In the process (c), the electrolyte layer 3 was formed on the anode composite 4. However, it may be formed on the cathode composite 2.

### (Embodiment 2)

The film type battery of this embodiment has the same structure as shown in Fig. 1. The cathode composite 2 is composed of the positive active material, the conductive material and the ion-conductive high-molecular compound. The anode composite 4 is composed of the negative active material and the ion-conductive high-molecular compound. The electrolyte layer 3 is composed of the ion-conductive high-molecular compound.

The film type battery of this embodiment was made up by the following processes (a) to (e).
(a); The cathode composite 2 was formed in the following manner. A mixture A₁ the same as in embodiment 1 was prepared. 10 weight parts of high-molecular mixture prepared by mixing the high-molecular compound of formula (III) with the high-molecular compound of formula (IV) at a weight ratio of 4 to 6, were mixed with 1 weight part of LiBF₄, 10 weight parts of 1,2-dimethoxyethane and 10 weight parts of γ-butyrolactone (mixture B₂). The mixture A₁ and the mixture B₂ were mixed at a weight ratio of 10 to 3 under an atmosphere of dried inert gas. The mixture thus prepared was cast by means of screen coating onto the positive current collector plate 1 on the surface of which a conductive carbon film had been formed. Thereafter, the mixture was irradiated with an electron beam at an electron beam intensity of 12 Mrad under the atmosphere of dried inert gas so as to be cured. The film thickness of the cathode composite 2 formed on the positive current collector plate 1 was 60 µm.
(b); The electrolyte layer 3 was formed on the cathode composite 2 in the following manner. 30 weight parts of high-molecular mixture the same as in process (a) were mixed with 6 weight parts of LiBF₄, 32 weight parts of 1,2-dimethoxyethane and 32 weight parts of γ-butyrolactone (mixture C₂). This mixture C₂ was cast by means of screen coating onto the cathode composite 2, and irradiated with an electron beam at an electron beam intensity of 8 Mrad under an atmosphere of dried inert gas so as to be cured. The thickness of the electrolyte layer 3 formed on the cathode composite 2 was 25 µm.
(c); The anode composite 4 was formed in the following manner. A mixture B₂ the same as in process (a) was prepared. This mixture B₂ was mixed with carbon powder, as the negative active material, at a weight ratio of 2 to 8 under an atmosphere of dried inert gas. The mixture thus prepared was cast by means of screen coating onto the negative current collector plate 5, and irradiated with an electron beam at an electron beam intensity of 12 Mrad under the atmosphere of dried inert gas so as to be cured. The thickness of the anode composite 4 formed on the negative current collector plate 5 was 30 µm.
(d); The electrolyte layer 3 was formed on the anode composite 4 in the following manner. A mixture C₂ the same as in process (b) was prepared. This mixture C₂ was cast by means of screen coating onto the anode composite 4, and irradiated with an electron beam at an electron beam intensity of 8 Mrad under an atmosphere of dried inert gas so as to be cured. The thickness of the electrolyte layer 3 formed on the anode composite 4 was 25 µm.

In the processes (a) through (d), the high-molecular compounds of formulas (III) and (IV) were polymerized by irradiation with an electron beam to form the ion-conductive high-molecular compound having crosslink network structures. LiBF₄ as the ionic compound was included in the prepared ion-conductive high-molecular compound dissolved by the 1,2-dimethoxyethane and γ-butyrolactone.
(e); A laminate of the electrolyte layer 3, the cathode composite 2 and the positive current collector plate 1 prepared by the process (b) and a laminate of the electrolyte layer 3, the anode composite 4 and the negative current collector plate 5 prepared by the process (d) were contacted with each other at the respective electrolyte layers 3. Thereby, a film type battery having the structure shown in Fig. 1 was prepared.

### (Embodiment 3)

The film type battery of this embodiment also has the same structure as shown in Fig. 1. The negative current collector plate 5 comprises a copper foil, and the cathode composite 2 is composed of the positive active material, the conductive material, the ion-conductive high-molecular compound and the binder. The anode composite 4 is composed of the negative active material, the ion-conductive high-molecular compound and the binder. The electrolyte layer 3 is composed of the ion-conductive high-molecular compound.

The film type battery of this embodiment was made up by the following processes (a) to (e).
(a); The cathode composite 2 was formed in the following manner. LiCoO₂ as the positive active material was mixed with acetylene black as the conductive material at a weight ratio of 85 to 15. This mixture was mixed with a dimethylformamide solution (2 wt%) of polyacrylonitrile as binder at a weight ratio of 2.4 to 2 under an atmosphere of dried inert gas (mixture A₃). A mixture B₂ the same as in embodiment 2 was prepared. The mixture A₃ and the mixture B₂ were mixed at a weight ratio of 10 to 3 under an atmosphere of dried inert gas. The mixture thus prepared was cast by means of screen coating onto the positive current collector plate 1, on the surface of which a conductive carbon film had been formed. Thereafter, the mixture was irradiated with an electron electron beam at an electron beam intensity of 12 Mrad under an atmosphere of dried inert gas so as to be cured. The film thickness of the cathode composite 2 formed on the positive current collector plate 1 was 60 µm.
(b); The electrolyte layer 3 was formed on the cathode composite 2 in the following manner. 30 weight parts of high-molecular mixture prepared by mixing the high-molecular compound of formula (III) with the high-molecular compound of formula (IV) at a weight ratio of 3.8 to 6.2 were mixed with 6 weight parts of LiBF₄, 32 weight parts of 1,2-dimethoxyethane and 32 weight parts of γ-butyrolactone (mixture C₃). This mixture C₃ was cast by means of screen coating onto the cathode composite 2 under an atomosphere of dried inert gas, and irradiated with an electron beam at an electron beam intensity of 8 Mrad under the atmosphere of dried inert gas so as to be cured. The thickness of the electrolyte layer 3 formed on the cathode composite 2 was 25 µm.
(c) ; The anode composite 4 was formed in the following manner. Carbon powder as the negative active material was mixed with a xylene solution (2 wt%) of a copolymer of ethylene-propylenecyclopentadiene as binder, at a weight ratio of 2 to 5 under an atmosphere of dried inert gas (mixture D₃). 10 weight parts of high-molecular mixture prepared by mixing the high-molecular compound of formula (III) with the high-molecular compound of formula (IV) at a weight ratio of 3.6 to 6.4 were mixed with 1 weight part of LiBF₄, 10 weight parts of 1,2-dimethoxyethane and 10 weight parts of γ-butyrolactone (mixture E₃). The mixture D₃ and the mixture E₃ were mixed at a weight ratio of 8 to 2 under an atmosphere of dried inert gas. The mixture thus prepared was cast by means of screen coating onto the negative current collector plate 5, and irradiated with an electron beam at an electron beam intensity of 12 Mrad under the atmosphere of dried inert gas so as to be cured. The film thickness of the anode composite 4 formed on the negative current collector plate 5 was 30 µm.
(d) ; The electrolyte layer 3 was formed on the anode composite 4 in the following manner. A mixture C₃ the same as in process (b) was prepared. This mixture C₃ was cast by means of screen coating onto the anode composite 4 under an atmosphere of dried inert gas, and irradiated with an electron beam at an electron beam intensity of 8 Mrad under the atmosphere of dried inert gas so as to be cured. The thickness of the electrolyte layer 3 formed on the anode composite 4 was 25 µm.
   In the processes (a) through (d), the high-molecular compounds of formulas (III) and (IV) were polymerized by irradiation with an electron beam to form the ion-conductive high-molecular compound having crosslink network structures. LiBF₄ as the ionic compound was included in the prepared ion-conductive high-molecular compound dissolved by 1,2-dimethoxyethane and γ-butyrolactone. The binder is included in the cathode composite 2 and the anode composite 4 respectively.
(e); A laminate of the electrolyte layer 3, the cathode composite 2 and the positive current collector plate 1 prepared by the process (b) and a laminate of the electrolyte layer 3, the anode composite 4 and the negative current collector plate 5 prepared by the process (d) were contacted with each other at the respective electrolyte layers 3. Thereby, a film type battery having the structure shown in Fig. 1 was prepared.

### (Embodiment 4)

A film type battery of this embodiment also has the same structure as shown in Fig. 1. The negative current collector plate 5 comprises a copper foil, and the cathode composite 2 is composed of the positive active material, the conductive material, the ion-conductive high-molecular compound and the binder. The anode composite 4 is composed of the negative active material, the ion-conductive high-molecular compound and the binder. The electrolyte layer 3 is composed of the ion-conductive high-molecular compound. These ion-conductive high-molecular compounds include ethylene oxide polymer.

The film type battery of this embodiment was made up by the following processes (a) to (e).
(a); The cathode composite 2 was formed in the following manner. A mixture A₃ the same as in embodiment 3 was prepared. 10 weight parts of high-molecular mixture prepared by mixing the high-molecular compound of formula (III) to the high-molecular compound of formula (IV) at a weight ratio of 4 to 6 were mixed with 1 weight part of LiBF₄, 10 weight parts of 1,2-dimethoxyethane, 10 weight parts of γ-butyrolactone and 0.06 weight parts of principal-chain straight-chain type polyethylene oxide (average molecular weight: 150,000) (mixture B₄). The mixture A₃ and the mixture B₄ were mixed at a weight ratio of 10 to 3 under an mixture B₄ were mixed at a weight ratio of 10 to 3 under an atmosphere of dried inert gas. The mixture thus prepared was cast onto the positive current collector plate 1 and irradiated with an electron beam so as to be cured, in the same way as in the process (a) of embodiment 3. The film thickness of the cathode composite 2 formed on the positive current collector plate 1 was 60 µm.
(b); The electrolyte layer 3 was formed on the cathode composite 2 in the following manner. 30 weight parts of high-molecular mixture prepared by mixing the high-molecular compound of formula (III) with the high-molecular compound of formula (IV) at a weight ratio of 3.8 to 6.2 were mixed with 6 weight parts of LiBF₄, 32 weight parts of 1,2-dimethoxyethane, 32 weight parts of γ-butyrolactone and 0.2 weight parts of principal-chain straight-chain type polyethylene oxide (average molecular weight: 150,000) (mixture C₄). This mixture C₄ was cast onto the cathode composite 2 and irradiated with an electron beam so as to be cured, in the same way as in the process (b) of embodiment 3. The thickness of the electrolyte layer 3 formed on the cathode composite 2 was 25 µm.
(c); The anode composite 4 was formed in the following manner. A mixture D₃ the same as in embodiment 3 was prepared. 10 weight parts of high-molecular mixture prepared by mixing the high-molecular compound of formula (III) with the high-molecular compound of formula (IV) at a weight ratio of 3.6 to 6.4 were mixed with 1 weight part of LiBF₄, 10 weight parts of 1,2-dimethoxyethane, 10 weight parts of γ-butyrolactone and 0.06 weight parts of principal-chain straight-chain type polyethylene oxide (average molecular weight: 150,000) (mixture E₄). The mixture D₃ and the mixture E₄ were mixed at a weight ratio of 8 to 2 under an atmosphere of dried inert gas. The mixture thus prepared was cast onto the negative current collector plate 5 and irradiated with an electron beam so as to be cured, in the same way as in the process (c) of embodiment 3. The film thickness of the anode composite 4 formed on the negative current collector plate 5 was 30 µm.
(d) ; The electrolyte layer 3 was formed on the anode composite 4 in the following manner. A mixture C₄ the same as in process (b) was prepared. This mixture C₄ was cast onto the anode composite 4 and irradiated with an electron beam so as to be cured, in the same way as in the process (d) of embodiment 3. The thickness of the electrolyte layer 3 formed on the anode composite 4 was 25 µm.
   In the processes (a) through (d), the high-molecular compounds of formulas (III) and (IV) were polymerized by irradiation with an electron beam to form the ion-conductive high-molecular compound having crosslink network structures. LiBF₄ as the ionic compound was included in the prepared ion-conductive high-molecular compound dissolved by 1,2-dimethoxyethane and γ-butyrolactone, and the principal-chain straight-chain type polyethylene oxide was also included therein. The binder is included in the cathode composite 2 and the anode composite 4.
(e); A laminate of the electrolyte layer 3, the cathode composite 2 and the positive current collector plate 1 prepared by the process (b) and a laminate of the electrolyte layer 3, the anode composite 4 and the negative current collector plate 5 prepared by the process (d) were contacted with each other at the respective electrolyte layers 3. Thereby, a film type battery having the structure shown in Fig. 1 was prepared.

### (Comparison example 1)

A film type battery to be compared was made up by the following processes (a) to (d). This film type battery was composed of the positive current collector plate, the cathode composite, the electrolyte layer, the anode, the negative current collector plate and the sealing agent.
(a) ; The cathode composite was formed in the same way as in embodiment 1.
(b); The anode was of lithium metal as the negative active material, formed by press bonding onto the negative current collector plate of stainless steel.
(c); The electrolyte layer was formed on the anode in the following manner. 30 weight parts of high-molecular mixture prepared by mixing the high-molecular compound of formula (III) with the high-molecular compound of formula (IV) at a weight ratio of 4 to 6, were mixed with 0.05 weight parts of azobisisobutyronitrile, 6 weight parts of LiBF₄, 32 weight parts of 1,2-dimethoxyethane and 32 weight parts of γ-butyrolactone. This mixture was cast onto the anode and left for one hour to cure at a temperature of 100°C under an atmosphere of dried inert gas. The thickness of the prepared electrolyte layer was 25 µm.
(d); A laminate of the cathode composite and the positive current collector plate prepared by the process (a) and a laminate of the electrolyte layer, the anode and the negative current collector plate prepared by the process (c) were contacted with each other at the cathode composite and the electrolyte layer respectively. Thereby, the battery of the comparison example was prepared.

The following charge/discharge cycle tests were done on the batteries of embodiments 1 to 4 and comparison example 1. Battery electrode surface area can be changed variously by the manufacturing process, and the area was set to 100 cm² in these tests.

Conditions of the charge/discharge cycle test were as follows: Temperature; 25°C, constant-current constant-voltage charge at 50 µA/cm², constant-current discharge at 50 µA/cm², charge end voltage; 4.1V, discharge end voltage; 2.7V.

Fig. 2 shows results of the charge/discharge cycle tests. In Fig. 2, the abscissa denotes a number of charge/discharge cycles (times) and the ordinate denotes battery capacity (mAh). It can be seen that the batteries of embodiments 1 to 4 offer more excellent charge/discharge cycle characteristics than that of the comparison example 1. In the batteries of embodiments 3 and 4, the mechanical strengths of the cathode composite 2 and the anode composite 4 are improved because they include the binder, so that these batteries offer more excellent charge/discharge cycle characteristics than those of the batteries of embodiments 1 and 2. Especially, in the battery of embodiment 4, the strength of the ion-conductive high-molecular compound is improved because the principal-chain straight-chain type polyethylene oxide is included in it. Therefore, the cathode composite 2, the electrolyte layer 3 and the anode composite 4 in the battery of embodiment 4 are further improved in their mechanical strengths, so that it offers a better charge/discharge cycle characteristic than that of embodiment 3.

## Claims

1. A secondary battery comprising a cathode mixture composite, an electrolyte and an anode mixture composite, the electrolyte being composed of an ion-conductive high-molecular compound and both the cathode mixture composite and the anode mixture composite having said ion-conductive high molecular compound as a component material,
characterised in that
said ion-conductive high-molecular compound is formed by polymerising at least one selected from compounds of formula (I): 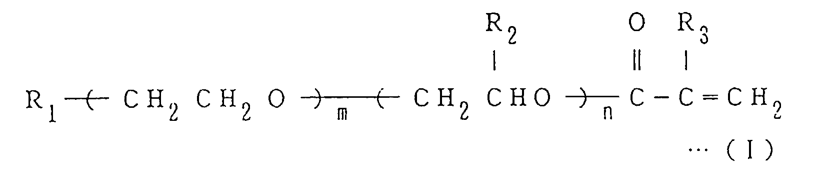 in which R₁, R₂ and R₃ are hydrogen or lower alkyl group with one or more carbon number, and n and m are integers according with m ≥ 1, n ≥ 0 and n/m = 0 to 5,
and compounds of formula (II): 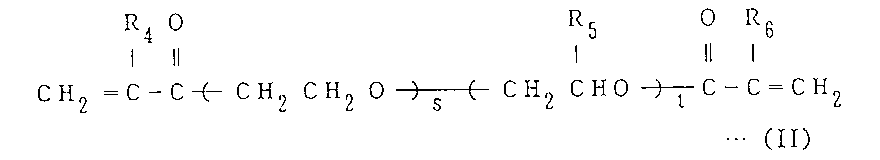 in which R₄, R₅ and R₆ are hydrogen or lower alkyl group with one or more carbon number, and s and t are integers according with s ≥ 3, t ≥ 0 and t/s = 0 to 5,
to form a crosslinked network structure;
the ion-conductive high-molecular compound including an organic compound to dissolve an ionic compound for conduction.

2. A secondary battery according to claim 1 in which said at least one compound polymerised to form the ion-conductive high-molecular compound is selected from mono- and di-(meth)acrylates of polyethylene gylcol.

3. A secondary battery according to claim 1 or claim 2, in which the ion-conductive high-molecular compound further comprises at least one of ethylene oxide polymer and ethylene oxide-propylene oxide polymer.

4. A secondary battery according to any one of claims 1 to 3 in which at least one of the cathode mixture composite and the anode mixture composite includes a binder as a component material.

5. A secondary battery according to claim 4, in which the binder consists of dimethylformamide solution of polyacrylonitrile, or xylene solution of copolymer of ethylene-propylene-cyclopentadiene.

6. A secondary battery according to any one of claims 1 to 5, in which the ionic compound is LiBF₄.

7. A secondary battery according to any one of claims 1 to 6, in which said organic compound is at least one of 1,2-dimethoxyethane and γ-butyrolactone.

8. A secondary battery according to any one of claims 1 to 7, in which the cathode mixture composite includes LiCoO₂ as its positive active material.

9. A secondary battery according to any one of claims 1 to 8, in which the anode mixture composite includes carbon as its negative active material.

## Patentansprüche

1. Sekundäre Batterie, umfassend ein Kathodenmischungs-Composit, einen Elektrolyten und ein Anoden-Mischungs-Composit, wobei der Elektrolyt aus einer ionenleitfähigen, hochmolekularen Verbindung besteht und sowohl das Kathodenmischungs-Composit als auch das Anoden-Mischungs-Composit diese ionenleitfähige, hochmolekulare Verbindung als ein Komponentenmaterial aufweisen, dadurch gekennzeichnet, daß die ionenleitfähige, hochmolekulare Verbindung hergestellt wird durch Polymerisation wenigstens einer aus den Verbindungen der Formel (I): 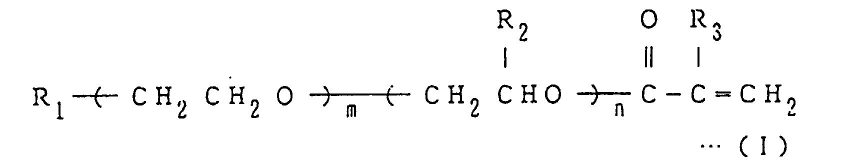 ausgewählten Verbindung, worin R₁, R₂ und R₃ Wasserstoff oder eine Niederalkylgruppe mit einer Kohlenstoffatomanzahl von 1 oder größer sind, und n und m ganze Zahlen gemäß m≥1, n≥0 sind, und n/m = 0 bis 5 ist,
und Verbindungen der Formel (II): 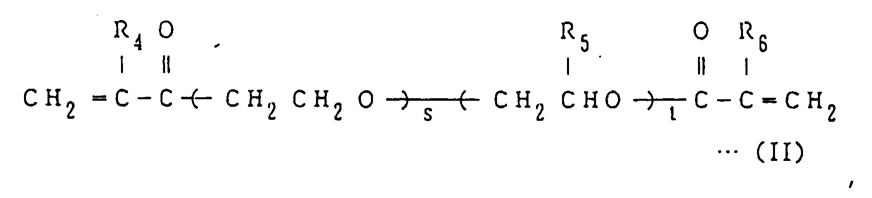 worin R₄, R₅ und R₆ Wasserstoff oder eine Niederalkylgruppe mit einer Kohlenstoffatomanzahl von 1 oder größer
sind, und s und t ganze Zahlen gemäß s≥3, t≥0 sind, und t/s = 0 bis 5 ist,
um eine vernetzte Netzwerkstruktur zu bilden; wobei die ionenleitfähige, hochmolekulare Verbindung eine organische Verbindung einschließt, um eine der Leitung dienende ionische Verbindung zu lösen.

2. Sekundäre Batterie gemäß Anspruch 1, worin die wenigstens eine Verbindung, die polymerisiert wird, um die ionenleitfähige, hochmolekulare Verbindung zu bilden, aus Mono- und Di-(meth)acrylaten des Polyethylenglycols ausgewählt wird.

3. Sekundäre Batterie gemäß Anspruch 1 oder Anspruch 2, worin die ionenleitfähige, hochmolekulare Verbindung weiterhin wenigstens eines der Polymere Ethylenoxid-Polymer und Ethylenoxid-Propylenoxid-Polymer umfaßt.

4. Sekundäre Batterie gemäß irgendeinem der Ansprüche 1 bis 3, worin wenigstens entweder das Kathodenmischungs-Composit oder das Anodenmischungs-Composit ein Bindemittel als Komponentenmaterial einschließt.

5. Sekundäre Batterie gemäß Anspruch 4, worin das Bindemittel aus einer Dimethylformamid-Lösung von Polyacrylnitril oder einer Xylol-Lösung eines Ethylen-Propylen-Cyclopentadien-Copolymers besteht.

6. Sekundäre Batterie gemäß irgendeinem der Ansprüche 1 bis 5, worin die ionische Verbindung LiBF₄ ist.

7. Sekundäre Batterie gemäß irgendeinem der Ansprüche 1 bis 6, worin die organische Verbindung wenigstens eine aus 1,2-Dimethoxyethan und γ-Butyrolacton ausgewählte Verbindung ist.

8. Sekundäre Batterie gemäß irgendeinem der Ansprüche 1 bis 7, worin das Kathodenmischungs-Composit LiCoO₂ als positives, aktives Material einschließt.

9. Sekundäre Batterie gemäß irgendeinem der Ansprüche 1 bis 8, worin das Anodenmischungs-Composit Kohlenstoff als negatives, aktives Material einschließt.

## Revendications

1. Un accumulateur comprenant un mélange composite de cathode, un électrolyte et un mélange composite d'anode, l'électrolyte étant constitué d'un composé conducteur ionique de haut poids moléculaire, et le mélange composite de cathode et le mélange composite d'anode contenant tous deux le composé conducteur ionique de haut poids moléculaire comme matière constituante,
caractérisé en ce que
ledit composé conducteur ionique de haut poids moléculaire est formé en polymérisant au moins un composé choisi parmi les composés de formule (I) : 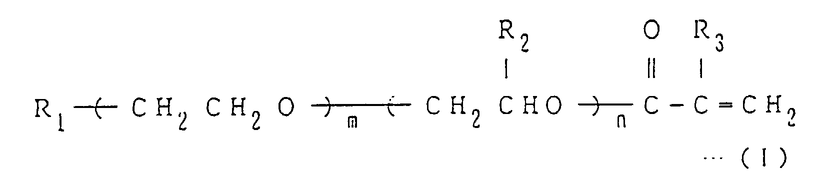 où R₁, R₂ et R₃ sont chacun l'hydrogène ou un groupe alkyle inférieur ayant un ou plusieurs atomes de carbone, et n et m sont des nombres entiers tels que m ≥1, n ≥ 0 et n/m = 0 à 5, et les composés de formule (II) : 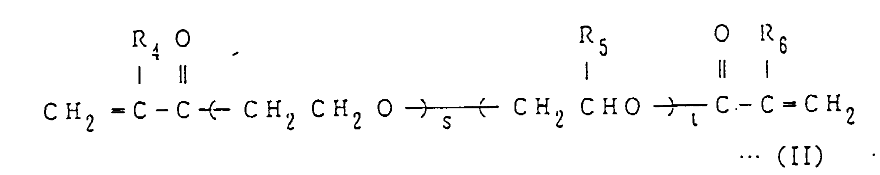 où R₄, R₅ et R₆ sont chacun l'hydrogène ou un groupe alkyle inférieur ayant un ou plusieurs atomes de carbone, et s et t sont des nombres entiers tels que s ≥ 3, t ≥ 0 et t/s = 0 à 5, pour former une structure réticulée ;
le composé conducteur ionique de haut poids moléculaire incluant un composé organique pour dissoudre un composé ionique pour assurer la conduction.

2. Un accumulateur selon la revendication 1, dans lequel ledit au moins un composé polymérisé servant à former le composé conducteur ionique de haut poids moléculaire est choisi parmi les mono- et di(méth)acrylates de polyéthylène-glycol.

3. Un accumulateur selon la revendication 1 ou la revendication 2, dans lequel le composé conducteur ionique de haut poids moléculaire comprend, de plus, au moins l'un d'un polymère d'oxyde d'éthylène et d'un polymère d'oxyde d'éthylène-oxyde de propylène.

4. Un accumulateur selon l'une quelconque des revendications 1 à 3, dans lequel au moins l'un du mélange composite de cathode et du mélange composite d'anode comprend un liant comme matière constituante.

5. Un accumulateur selon la revendication 4, dans lequel le liant consiste en une solution de polyacrylonitrile dans le diméthylformamide, ou une solution de copolymère éthylène-propylène-cyclopentadiène dans le xylène.

6. Un accumulateur selon l'une quelconque des revendications 1 à 5, dans lequel le composé ionique est LiBF₄.

7. Un accumulateur selon l'une quelconque des revendications 1 à 6, dans lequel ledit composé organique est au moins l'un du 1,2-diméthoxyéthane et de la γ-butyrolactone.

8. Un accumulateur selon l'une quelconque des revendications 1 à 7, dans lequel le mélange composite de cathode comprend LiCoO₂ en tant que sa matière active positive.

9. Un accumulateur selon l'une quelconque des revendications 1 à 8, dans lequel le mélange composite d'anode comprend du carbone en tant que sa matière active négative.
